(19) Europäisches Patentamt

European Patent Office

Office européen des brevets

(11) EP 0 745 558 B1

(12) **EUROPÄISCHE PATENTSCHRIFT**

(45) Veröffentlichungstag und Bekanntmachung des Hinweises auf die Patenterteilung:
**07.07.1999 Patentblatt 1999/27**

(51) Int. Cl.$^6$: **C01B 33/193**, C08K 3/36, C08L 21/00, C09C 1/30

(21) Anmeldenummer: 96108371.4

(22) Anmeldetag: 25.05.1996

(54) **Fällungskieselsäuren, Verfahren zu ihrer Herstellung und Verwendung in vulkanisierbaren Kautschukmischungen**

Precipitated silicas, process for their preparation and their use in vulcanizable rubber mixtures

Silices précipitées, leur procédé de préparation et leur utilisation dans des mélanges pour caoutchoucs vulcanisables

(84) Benannte Vertragsstaaten:
**DE ES FI FR GB IT LU NL**

(30) Priorität: **01.06.1995 DE 19520126**
**27.04.1996 DE 19617039**

(43) Veröffentlichungstag der Anmeldung:
**04.12.1996 Patentblatt 1996/49**

(73) Patentinhaber:
**Degussa-Hüls Aktiengesellschaft**
**45764 Marl (DE)**

(72) Erfinder:
• **Görl, Udo, Dr.**
**53332 Bornheim (DE)**
• **Hunsche, Andrea**
**50226 Frechen (DE)**
• **Kuhlmann, Robert**
**50374 Erftstadt (DE)**
• **Siray, Mustafa, Dr.**
**53127 Bonn (DE)**
• **Esch, Heinz**
**53117 Bonn (DE)**

(56) Entgegenhaltungen:
**EP-A- 0 078 909 EP-A- 0 157 703**
**EP-A- 0 442 143 EP-A- 0 501 227**
**EP-A- 0 647 591**

• **GÖRL U ET AL 'KIESELSÄURESTRUKTUR UND DEREN EINFLUSS AUF DAS GUMMITECHNISCHE WERTEBILD', 29 Juni 1994, DEUTSCHE KAUTSCHUK TAGUNG, SEITEN 47 - 50 XP000577803 * das ganze Dokument ***

**Beschreibung**

Fällungskieselsäuren werden als Verstärkerfüllstoffe in vulkanisierbaren Kautschukmischungen eingesetzt.

(S. Wolff, E.H. Tan: Performance of Silicas with different Surface areas in NR. Vortrag gehalten anläßlich des ACS-Meetings, New York City, N.Y., April 1986;

S. Wolff, R. Panenka, E.H. Tan: Reduction of Heat Generation Truck Tire Tread and Subtread Compounds. Vortrag gehalten anläßlich der International Conference on Rubber, Jamshedpur (Indien), Nov. 1986).

Als wesentlicher Parameter für die Charakterisierung einer Fällungskieselsäure dient die Oberfläche, die entweder durch Adsorption von Stickstoff (ISO 5794/1, Annex D) oder von gummitechnisch größerer Relevanz durch Adsorption von CTAB gemäß ASTM D 3765-92 bestimmt wird. Unter Bezugnahme auf die zu erhaltenden gummitechnischen Daten werden Fällungskieselsäuren gemäß ISO 5794/1 in sechs Oberflächenklassen eingeteilt.

In der Reifenanwendung werden jedoch nahezu ausschließlich Fällungskieselsäuren mit CTAB-Oberflächen zwischen 100 und 200 $m^2$/g eingesetzt.

(US-Patent 5,227,425)

S. Wolff: The Influence of Fillers on Rolling Resistance presented at the 129th Meeting of the Rubber Division American Chemical Society New York N.Y., April 8-11, 1986).

Dies liegt darin begründet, daß Fällungskieselsäuren in der Reifenanwendung hohe Festigkeitswerte sowie insbesondere im Laufflächenbereich einen guten Abriebwiderstand besitzen müssen. Dies wird nur durch den Einsatz von Fällungskieselsäuren mit diesem oben genannten Oberflächenbereich gewährleistet. Fällungskieselsäuren mit CTAB-Oberflächen >200 $m^2$/g werden heute hingegen nahezu nicht verwendet. Jedoch gerade diese Fällungskieselsäuren sollten sich durch einen besonders guten Abriebwiderstand auszeichnen und daher in der praktischen Reifenanwendung von besonderem Interesse sein. Der wesentliche Grund für ihren Nichteinsatz liegt in der Tatsache begründet, daß sich Fällungskieselsäuren mit steigender Oberfläche extrem schlecht in der Gummimischung verteilen (dispergieren) lassen. Diese schlechte Verteilbarkeit führt dann dazu, daß diese Produkte nicht das von ihnen erwartete Wertebild ergeben und somit keine Vorteile, zum Teil sogar Nachteile, gegenüber den heute eingesetzten Reifenfällungskieselsäuren erzielen.

Der Grund für diese schlechte Dispersion hochoberflächiger Fällungskieselsäuren liegt in einer weiteren wichtigen Eigenschaft der Fällungskieselsäure, und zwar ihrer Struktur (gemessen mittels DBP-Absorption gemäß ASTM D 2414). Besonders wichtig ist jedoch ihre Makroporengrößenverteilung (gemessen mittels Hg-Porosimetrie gemäß DIN 66 133) und ihre Veränderung mit der Oberfläche.

(U. Görl, R. Rausch, H. Esch, R. Kuhlmann: Kieselsäurestruktur und ihr Einfluß auf das gummitechnische Wertebild. Vortrag, gehalten anläßlich der Deutschen Kautschuk-Tagung in Stuttgart, Juni 1994).

Mit anderen Worten, die Makroporengrößenverteilung nimmt in der Regel mit steigender Oberfläche ab, wenn es nicht gelingt, durch geeignete fälltechnische Maßnahmen bei der Herstellung der Fällungskieselsäure bei gleicher Oberfläche zusätzlich größere Poren zu erzeugen.

Insbesondere Fällungskieselsäuren mit CTAB-Oberflächen >220 $m^2$/g bedürfen besonderer fälltechnischer Maßnahmen, um trotz der hohen Oberfläche noch genügend große Makroporen und damit gutes Dispersionsverhalten zu besitzen.

Es ist bekannt, Fällungskieselsäure mit den physikalischchemischen Parametern:

| | |
|---|---|
| BET-Oberfläche | 35 bis 350 $m^2$/g |
| Verhältnis BET/CTAB-Oberfläche | 0,8 bis 1,1 |
| Porenvolumen PV | 1,6 bis 3,4 ml/g |
| Silanolgruppendichte ($V_2$ = Verbrauch an NaOH) | 6 bis 20 ml |
| Mittlere Aggregatgröße | 250 bis 1500 nm |
| CTAB-Oberfläche | 30 bis 350 $m^2$/g |
| DBP-Zahl | 150 bis 300 ml/100 g |
| $V_2/V_1$ nach Hg-Porosimetrie | 0,19 bis 0,46 |
| vorzugsweise | 0,20 bis 0,23 |

(fortgesetzt)

| DBP/CTAB | 1,2 bis 2,4 |
|---|---|

in Kautschukmischungen einzusetzen (DE-A 44 27 137).

Die Aufgabe der Erfindung ist somit die Herstellung und Charakterisierung von Fällungskieselsäuren mit CTAB-Oberflächen >200 $m^2$/g, die sich durch besonders hohe Makroporengrößenverteilung und damit durch besonders gute Dispersion in der Gummimischung auszeichnen.

Gegenstand der Erfindung sind Fällungskieselsäuren, welche dadurch gekennzeichnet sind, daß sie eine CTAB-Oberfläche (gemäß ASTM D 3765-92) von 200 bis 400 $m^2$/g, eine DBP-Zahl (gemäß ASTM D 2414) zwischen 230 und 380 ml/100g, eine Silanolgruppendichte ($V_2$-Verbrauch an NaOH) von 20 bis 30 ml und eine für den jeweiligen Oberflächenbereich typische, mittels Hg-Porosimetrie (DIN 66 133) zu ermittelnde Makroporengrößenverteilung für bestimmte Porengrößenintervalle (inkrementelle Auftragungsweise) wie folgt aufweisen:

| | Oberflächenbereich CTAB: 200-250 $m^2$/g | Oberflächenbereich CTAB: 250-300 $m^2$/g | Oberflächenbereich CTAB: 300-400 $m^2$/g |
|---|---|---|---|
| Porengrößenintervall [nm] | Hg-Verbrauch ml/g Kieselsäure | | |
| 10 - 20 | 0,27 - 0,49 | 0,35 - 0,50 | 0,32 - 0,42 |
| 20 - 30 | 0,22 - 0,32 | 0,15 - 0,30 | 0,17 - 0,22 |
| 30 - 40 | 0,15 - 0,21 | 0,12 - 0,17 | 0,12 - 0,15 |
| 40 - 50 | 0,11 - 0,16 | 0,09 - 0,12 | 0,08 - 0,11 |
| 50 - 60 | 0,08 - 0,12 | 0,06 - 0,10 | 0,06 - 0,09 |

Ein weiterer Gegenstand der Erfindung ist ein Verfahren zur Herstellung der Fällungskieselsäuren gemäß Anspruch 1, welches dadurch gekennzeichnet ist, daß man in eine auf 30 bis 90 °C, vorzugsweise auf 50 bis 80 °C, erwärmte Vorlage aus Wasser, die unter Zusatz von geringen Mengen an Schwefelsäure auf einen pH-Wert von 5 bis 5,9 eingestellt ist, unter Konstanthalten des pH-Wertes von 5,0 bis 5,9 durch gleichzeitigen Zulauf von Alkalisilikatlösung und Schwefelsäure, unter anhaltendem Scheren während der gesamten Fällzeit, durch 30 bis 120-minütige Unterbrechung der Fällung, die Umsetzung bis zu einer Feststoffkonzentration von 40 bis 60 g/l durchführt, die Fällungskieselsäuresuspension filtriert, wäscht und den Filterkuchen einer Kurzzeittrocknung unterzieht, gegebenenfalls vermahlt oder granuliert.

Ein weiterer Gegenstand der Erfindung sind vulkanisierbare Kautschukmischungen bzw. die Verwendung der erfindungsgemäßen Kieselsäuren in vulkanisierbaren Kautschukmischungen, welche dadurch gekennzeichnet sind, daß diese Mischungen 5 bis 100 Teile, insbesondere 15 bis 60 Teile der Kieselsäuren, bezogen auf 100 Teile Kautschuk, enthalten. Die erfindungsgemäßen Kieselsäuren können dabei der Mischung als Pulver oder in staubarmer Form, z.B. als Granulat oder Mikroperlen, in der in der Gummiindustrie üblichen Art und Weise auf einem Kneter oder auf der Walze der Gummimischung zugefügt werden. Verwendet werden können auch Polymerbatches, Ballen oder Pulver, bei denen die erfindungsgemäßen Kieselsäuren während der Herstellung der Kautschukmischung eingebracht werden.

Ein weiterer Gegenstand der Erfindung sind erfindungsgemäße Fällungskieselsäuren, welche dadurch gekennzeichnet sind, daß auf ihren Oberflächen mit Organosilanen der Formeln I bis III

$$[R_n^1\text{-}(RO)_{3-n}\,Si\text{-}(Alk)_m\text{-}(Ar)_p]_q[B] \qquad\qquad (I)$$

oder

$$R_n^1\,(RO)_{3-n}\,Si\text{-}(Alkyl) \qquad\qquad (II)$$

oder

$$R_n^1\,(RO)_{3-n}\,Si\text{-}(Alkenyl) \qquad\qquad (III),$$

modifiziert werden, wobei bedeuten:

B: -SCN, -SH, -Cl, -NH$_2$ (wenn q = 1) oder -S$_x$- (wenn q = 2),

R und R$^1$: eine Alkylgruppe mit 1 bis 4 Kohlenstoffatomen, den Phenylrest, wobei alle Reste R und R$^1$ jeweils die gleiche oder eine verschiedene Bedeutung haben können,

n: 0; 1 oder 2,

Alk: einen zweiwertigen geraden oder verzweigten Kohlenwasserstoffrest mit 1 bis 6 Kohlenstoffatomen,

m: 0 oder 1,

Ar: einen Arylenrest mit 6 bis 12 C-Atomen, bevorzugt 6 C-Atome,

p: 0 oder 1 mit der Maßgabe, daß p und n nicht gleichzeitig 0 bedeuten,

x: eine Zahl von 2 bis 8,

Alkyl: einen einwertigen geraden oder verzweigten gesättigten Kohlenwasserstoffrest mit 1 bis 20 Kohlenstoffatomen, bevorzugt 2 bis 8 Kohlenstoffatomen,

Alkenyl: einen einwertigen geraden oder verzweigten ungesättigten Kohlenwasserstoffrest mit 2 bis 20 Kohlenstoffatomen, bevorzugt 2 bis 8 Kohlenstoffatomen.

Die auf der Oberfläche mit Organosilanen modifizierten Fällungskieselsäuren können hergestellt werden, indem man die Fällungskieselsäuren mit den Organosilanen in Mischungen von 0,5 bis 50 Teilen, bezogen auf 100 Teile Fällungskieselsäure, behandelt.

In einer bevorzugten Ausführungsform der Erfindung kann als Organosilan Bis-(triethoxysilylpropyl)-tetrasulfan oder eine feste Darreichungsform, zum Beispiel in einem Gemisch mit Industrieruß, eingesetzt werden.

Die Zugabe eines oder mehrerer Silane kann zum einen gleichzeitig zusammen mit den erfindungsgemäßen Kieselsäuren zur Kautschukmischung erfolgen, wobei die Reaktion zwischen Fällungskieselsäure und Silan während des Mischprozesses bei erhöhten Temperaturen erfolgt. Zum anderen kann die Zugabe der Silane zu der Fällungskieselsäure/Kautschukmischung in der Weise erfolgen, daß man die Fällungskieselsäure vor der Zugabe zur Kautschukmischung mit einem oder mehreren Silanen behandelt und die vormodifizierte Kieselsäure zur Kautschukmischung hinzugibt. Eine derartige Maßnahme kann analog zur Verfahrensweise gemäß DE-A 40 04 781 erfolgen.

Ein weiterer Gegenstand der Erfindung sind Kautschukmischungen und/oder Vulkanisate, die die erfindungsgemäßen Fällungskieselsäuren, die gegebenenfalls mit Organosilanen modifiziert sind, enthalten. Die erfindungsgemäßen Fällungskieselsäuren können dabei in allen mit Beschleuniger/Schwefel, aber auch peroxidisch vernetzbaren Kautschukarten, wie in DIN/ISO 1629 aufgelistet, eingesetzt werden. Zu nennen wären hierbei zum Beispiel Elastomere, natürliche und synthetische, ölgestreckte oder nicht, als Einzelpolymer oder Verschnitt (Blend) mit anderen Kautschuken, wie zum Beispiel Naturkautschuke, Butadienkautschuke, Isoprenkautschuke, Butadien-Styrol-Kautschuke, insbesondere SBR, hergestellt mittels des Lösungspolymerisationsverfahrens, Butadien-Acrylnitrilkautschuke, Butylkautschuke, Terpolymere aus Ethylen, Propylen und nicht konjugierte Diene. Ferner kommen für Kautschukgemische mit den genannten Kautschuken die folgenden zusätzlichen Kautschuke in Frage:

Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Ethylen-Propylen-Copolymere, gegebenenfalls auch chemische Derivate des Naturkautschuks sowie modifizierte Naturkautschuke.

Ebenso bekannt sind die üblichen weiteren Bestandteile wie Gummiruße, natürliche Füllstoffe, Weichmacher, Stabilisatoren, Aktivatoren, Pigmente, Alterungsschutzmittel und Verarbeitungshilfsmittel in den üblichen Dosierungen.

Die erfindungsgemäßen Fällungskieselsäuren, mit und ohne Silan, finden Einsatz in allen Gummianwendungen, wie zum Beispiel Reifen, Fördergurte, Dichtungen, Keilriemen, Schläuche, Schuhsohlen etc.

## Beispiele

In den Beispielen eingesetzte Prüfverfahren sind:

| Rauhigkeitsfaktor $F^2H$ | ASTM D 2663-89 |
|---|---|
| ML (1+4) | DIN 53 523/524 |
| Zugfestigkeit | DIN 53 504 |
| Modul 300 % | DIN 53 504 |
| Bruchdehnung | DIN 53 504 |
| Shore-A-Härte | DIN 53 505 |
| DIN-Abrieb | DIN 53 516 |
| MTS-Daten | DIN 53 513 |
| Weiterreißwiderstand | DIN 53 507 |

In den Anwendungsbeispielen eingesetzte Einsatzstoffe sind:

| Handelsname | Beschreibung/Firma |
|---|---|
| Buna VSL 1954/S 25 | Styrol-Butadien-Kautschuk, hergestellt nach dem Lösungspolymerisationsverfahren (Bayer AG). |
| Buna CB 11 S | Butadienkautschuk (Bayer AG). |
| Protector G 35 | Ozonschutzwachs (Fuller). |
| X 50-S | Bis(triethoxysilylpropyl)tetrasulfan/N 330 50 : 50-Abmischung (Degussa AG). |

Die Silanolgruppendichte wird bestimmt nach G. W. Sears, Analytical Chemistry, 12., 1982 - 83 (1956).
Bestimmung der Makroporengrößenverteilung mittels Hg-Porosimetrie

Verfahren:              DIN 66 133

Gerät:                   Autopore II 9220 (Micromeritics GmbH)

Probenvorbereitung:   - Vortrocknung der Probe 15 h/100 °C
                       - Abkühlen auf Raumtemperatur im Exsikkator
                       - Überführen der Probe (0,05-0,1 g) in Penetrometer

Geräteparameter:      - Druckbereich 4 kPa - 200 MPa (53 Meßpunkte)
                       - Kontaktwinkel 140°
                       - Hg-Oberflächenspannung 0,48 N/m

Bestimmung der Dispersion mittels Rauhigkeitsmessung der Vulkanisatoberfläche

Verfahren:       ASTM D 2663-89
Gerät:           Surfanalyzer
Vorgehensweise:  Mittels einer sich über eine frisch angeschnittene Vulkanisatoberfläche bewegenden Diamantnadel wird die Oberflächenrauhigkeit bestimmt und die Werte nach elektronischer Aufbereitung in Form eines Rauhigkeitsfaktors berechnet. Dieser Faktor setzt sich dabei aus der Anzahl der Signale (F) und deren Intensität (H) wie folgt zusammen:
                 Oberflächenrauhigkeitsfaktor = $F^2H$
                 Die Interpretation dieses Faktors sagt aus, daß sich die Dispersion von Füllstoffen in der Polymermatrix umso günstiger darstellt, je niedriger dieser Faktor ist.

**Beispiel 1:**

Herstellung und Charakterisierung von erfindungsgemäßen Fällungskieselsäuren im CTAB-Oberflächenbereich von 200 - 250 m$^2$/g

In einem Bottich, der mit einem Ekato-Scheibenrührer und mit einem MIG-Rührwerk der Fa. Ekato ausgerüstet ist, werden unter Rühren 50 m$^3$ heißes Wasser und so viel handelsübliche Schwefelsäure (96 %ig) vorgelegt, bis pH 5,5 erreicht ist. Unter Aufrechterhaltung einer Fälltemperatur von 78 °C und pH 5,5 werden gleichzeitig 7,6 m$^3$/h handelsübliche Natronwasserglaslösung (Gewichtsmodul 3,42, Dichte 1,348) und 0,7 m$^3$/h Schwefelsäure (96 %ig) in 70 Minuten zugegeben. Während der gesamten Fällzeit ist der Ekato-Scheibenrührer SR (Durchmesser 320 mm, 6 Blätter, 740 U/min) in Betrieb. Nach 12 Minuten wird die Zugabe der Edukte Natronwasserglaslösung und Schwefelsäure für 80 Minuten unterbrochen. Auch während dieser Unterbrechungszeit werden die beiden Rührwerke in Betrieb gehalten. Die Fällungskieselsäure wird auf einer Filterpresse abgetrennt, gewaschen und der Filterkuchen einer Sprühtrocknung oder Spinflashtrocknung unterzogen und gegebenenfalls trocken zwischen zwei Walzen granuliert.

Die erfindungsgemäße Fällungskieselsäure besitzt eine CTAB-Oberfläche von 206 m$^2$/g, eine DBP-Zahl von 298 ml/100g sowie eine Silanolgruppendichte (V$_2$) von 20,5 ml. Die Makroporengrößenverteilung stellt sich wie folgt dar:

| Makroporengrößenintervall [nm] | Hg-Verbrauch ml/g Kieselsäure |
|---|---|
| 10 - 20 | 0,29 |
| 20 - 30 | 0,24 |
| 30 - 40 | 0,19 |
| 40 - 50 | 0,15 |
| 50 - 60 | 0,11 |

**Beispiel 2:**

In einem Bottich, der mit einem Ekato-Scheibenrührer und mit einem MIG-Rührwerk der Fa. Ekato ausgerüstet ist, werden unter Rühren 50 m$^3$ heißes Wasser und so viel handelsübliche Schwefelsäure (96 %ig) vorgelegt, bis pH 5,5 erreicht ist. Unter Aufrechterhaltung einer Fälltemperatur von 78 °C und pH 5,5 werden gleichzeitig 7,6 m$^3$/h handelsübliche Natronwasserglaslösung (Gewichtsmodul 3,42, Dichte 1,348) und 0,7 m$^3$/h Schwefelsäure (96 %ig) in 56 Minuten zugegeben. Während der gesamten Fällzeit ist der Ekato-Scheibenrührer SR (Durchmesser 320 mm, 6 Blätter, 740 U/min) in Betrieb. Nach 12 Minuten wird die Zugabe der Edukte Natronwasserglaslösung und Schwefelsäure für 80 Minuten unterbrochen. Auch während dieser Unterbrechungszeit werden die beiden Rührwerke in Betrieb gehalten. Die Fällungskieselsäure wird auf einer Filterpresse abgetrennt, gewaschen und der Filterkuchen einer Sprühtrocknung oder Spinflashtrocknung unterzogen und gegebenenfalls trocken zwischen zwei Walzen granuliert.

Die erfindungsgemäße Fällungskieselsäure besitzt eine CTAB-Oberfläche von 240 m$^2$/g, eine DBP-Zahl von 314 ml/100g sowie eine Silanolgruppendichte (V$_2$) von 21,0 ml. Die Makroporengrößenverteilung stellt sich wie folgt dar:

| Makroporengrößenintervall [nm] | Hg-Verbrauch ml/g Kieselsäure |
|---|---|
| 10 - 20 | 0,48 |
| 20 - 30 | 0,30 |
| 30 - 40 | 0,16 |
| 40 - 50 | 0,13 |
| 50 - 60 | 0,09 |

**Beispiel 3:**

Herstellung und Charakterisierung einer erfindungsgemäßen Fällungskieselsäure im CTAB-Oberflächenbereich von 250 - 300 m$^2$/g

In einem Bottich, der mit einem Ekato-Scheibenrührer und mit einem MIG-Rührwerk der Fa. Ekato ausgerüstet ist, werden unter Rühren 57 m$^3$ heißes Wasser und so viel handelsübliche Schwefelsäure (96 %ig) vorgelegt, bis pH 5,5 erreicht ist. Unter Aufrechterhaltung einer Fälltemperatur von 55 °C und pH 5,5 werden gleichzeitig 8,2 m$^3$/h handelsübliche Natronwasserglaslösung (Gewichtsmodul 3,42, Dichte 1,348) und 0,75 m$^3$/h Schwefelsäure (96 %ig) in 56 Minuten zugegeben. Während der gesamten Fällzeit ist der Ekato-Scheibenrührer SR (Durchmesser 320 mm, 6 Blätter, 740 U/min) in Betrieb. Nach 13 Minuten wird die Zugabe der Edukte Natronwasserglaslösung und Schwefelsäure für 90 Minuten unterbrochen. Auch während dieser Unterbrechungszeit werden die beiden Rührwerke in Betrieb gehalten. Die Fällungskieselsäure wird auf einer Filterpresse abgetrennt, gewaschen und der Filterkuchen einer Sprühtrocknung oder Spinflashtrocknung unterzogen und gegebenenfalls trocken zwischen zwei Walzen granuliert.

Die erfindungsgemäße Fällungskieselsäure besitzt eine CTAB-Oberfläche von 283 m$^2$/g, eine DBP-Zahl von 349 ml/100g sowie eine Silanolgruppendichte ($V_2$) von 24,0 ml. Die Makroporengrößenverteilung stellt sich wie folgt dar:

| Makroporengrößenintervall [nm] | Hg-Verbrauch ml/g Kieselsäure |
|---|---|
| 10 - 20 | 0,42 |
| 20 - 30 | 0,22 |
| 30 - 40 | 0,14 |
| 40 - 50 | 0,10 |
| 50 - 60 | 0,07 |

**Beispiel 4:**

Herstellung und Charakterisierung einer erfindungsgemäßen Fällungskieselsäure im CTAB-Oberflächenbereich von 300 - 400 m$^2$/g

In einem Bottich, der mit einem Ekato-Scheibenrührer und mit einem MIG-Rührwerk der Fa. Ekato ausgerüstet ist, werden unter Rühren 57 m$^3$ heißes Wasser und so viel handelsübliche Schwefelsäure (96 %ig) vorgelegt, bis pH 5,5 erreicht ist. Unter Aufrechterhaltung einer Fälltemperatur von 50 °C und pH 5,5 werden gleichzeitig 8,2 m$^3$/h handelsübliche Natronwasserglaslösung (Gewichtsmodul 3,42, Dichte 1,348) und 0,75 m$^3$/h Schwefelsäure (96 %ig) in 56 Minuten zugegeben. Während der gesamten Fällzeit ist der Ekato-Scheibenrührer SR (Durchmesser 320 mm, 6 Blätter, 740 U/min) in Betrieb. Nach 13 Minuten wird die Zugabe der Edukte Natronwasserglaslösung und Schwefelsäure für 90 Minuten unterbrochen. Auch während dieser Unterbrechungszeit werden die beiden Rührwerke in Betrieb gehalten. Die Fällungskieselsäure wird auf einer Filterpresse abgetrennt, gewaschen und der Filterkuchen einer Sprühtrocknung oder Spinflashtrocknung unterzogen und gegebenenfalls trocken zwischen zwei Walzen granuliert.

Die erfindungsgemäße Fällungskieselsäure besitzt eine CTAB-Oberfläche von 360 m$^2$/g, eine DBP-Zahl von 350 ml/100 g sowie eine Silanolgruppendichte ($V_2$) von 29,0 ml. Die Makroporengrößenverteilung stellt sich wie folgt dar:

| Makroporengrößenintervall [nm] | Hg-Verbrauch ml/g Kieselsäure |
|---|---|
| 10 - 20 | 0,35 |
| 20 - 30 | 0,19 |
| 30 - 40 | 0,13 |

(fortgesetzt)

| Makroporengrößenintervall [nm] | Hg-Verbrauch ml/g Kieselsäure |
|---|---|
| 40 - 50 | 0,11 |
| 50 - 60 | 0,09 |

Die physikalisch-chemischen Kenndaten der gemäß den Beispielen 1 bis 4 erhaltenen Fällungskieselsäuregranulate sind wie folgt:

| Beispiel | 1 | 2 | 3 | 4 |
|---|---|---|---|---|
| Feuchte % | 4,8 | 5,5 | 5,0 | 5,2 |
| $N_2$-Oberfläche (BET) $m^2$/g | 275 | 290 | 413 | 522 |
| Stampfdichte g/l | 246 | 270 | 234 | 220 |
| DBP-Aufnahme g/100 g -am Originalmaterial- | 194 | 198 | 226 | 236 |
| ALPINE-Siebrückstand > 63 $\mu$m | 89 | 93 | 83 | 85 |

**Beispiel 5:**

Fällungskieselsäuren in einer NR-LKW-Laufflächenmischung

| Rezeptur | 1 | 2 | 3 | 4 | 5 |
|---|---|---|---|---|---|
| | (Standard) | | | | |
| RSS 1 | 100 | 100 | 100 | 100 | 100 |
| N 220 | 50 | - | - | - | - |
| Fällungskieselsäure nach Beispiel 1 | - | 38 | - | - | - |
| Fällungskieselsäure nach Beispiel 2 | - | - | 35 | - | - |
| Fällungskieselsäure nach Beispiel 3 | - | - | - | 32 | - |
| Fällungskieselsäure nach Beispiel 4 | - | - | - | - | 32 |
| ZnO RS | 4 | 4 | 4 | 4 | 4 |
| Stearinsäure | 2 | 2 | 2 | 2 | 2 |
| 6PPD | 2 | 2 | 2 | 2 | 2 |
| TMQ | 1 | 1 | 1 | 1 | 1 |
| Protector G 35 | 1,5 | 1,5 | 1,5 | 1,5 | 1,5 |
| X 50-S | - | 19 | 19 | 19 | 19 |
| TBBS | 1,2 | - | - | - | - |
| DPG | - | 0,75 | 0,75 | 0,75 | 0,75 |

(fortgesetzt)

| Rezeptur | 1 | 2 | 3 | 4 | 5 |
|---|---|---|---|---|---|
| | (Standard) | | | | |
| CBS | - | 1,45 | 1,45 | 1,45 | 1,45 |
| Schwefel | 1,2 | 1,7 | 1,7 | 1,7 | 1,7 |

Mischvorschrift:

Mischer:   GK 1,6 N

*Stufe 1*

Friktion:   1:1,1
Drehzahl:   70
Füllgrad:   0,7

| Mischzeit | Mischung 1 | Mischung 2 - 5 |
|---|---|---|
| 0 - 1' | Polymer | Polymer |
| 1 - 2' | ½ N 220, ZnO, Stearinsäure, Protector G 35 | ½ Kieselsäure, ZnO, Stearinsäure, Protector G 35 |
| 2 - 3' | ½ N 220 6PPD + TMQ | ½ Kieselsäure, 6PPD + TMQ |
| 3 - 4,5' | Mischen + Ausstoßen | Mischen + Ausstoßen |
| Ausstoßtemperatur: 155 °C | | |

*Stufe 2*

Friktion:   1:1,1
Drehzahl:   70
Füllgrad:   0,68

| Mischzeit | Mischung 1 | Mischung 2 - 5 |
|---|---|---|
| 0 - 4' | Batch Stufe 1 | Batch Stufe 1, X 50-S |
| 4' | Ausstoßen | |
| Ausstoßtemperatur: 160 °C | | |

*Stufe 3*

Friktion:   1:1,1
Drehzahl:   40

Füllgrad:　　0,65

| Mischzeit | 1 | 2 |
|---|---|---|
| 0 - 1,5' | Batch Stufe 2 TBBS, Schwefel | Batch Stufe 2 CBS, DPG, Schwefel |
| 1,5' | Ausstoßen | |
| Ausstoßtemperatur: ~90 °C | | |

Vulkanisatdaten:　　150 °C/$t_{95\%}$

| Mischung | 1 | 2 | 3 | 4 | 5 |
|---|---|---|---|---|---|
| | (Standard) | Fällungskiesel-säure nach Bei-spiel 1 | Fällungskiesel-säure nach Bei-spiel 2 | Fällungskiesel-säure nach Bei-spiel 3 | Fällungskiesel-säure nach Bei-spiel 4 |
| *Vulkanisations-zeit [min]* | 20 | 35 | 35 | 35 | 40 |
| $F^2H$ (Dispersion) | 13897 | 10327 | 6688 | 12130 | 13472 |
| ML (1+4) | 71 | 71 | 68 | 71 | 68 |
| Zugfestigkeit [MPa] | 25,0 | 23,6 | 25,9 | 23,4 | 25,9 |
| Modul 300 % [MPa] | 11,7 | 12,5 | 12,0 | 11,2 | 10,9 |
| Shore-A-Härte | 66 | 69 | 69 | 68 | 64 |
| DIN-Abrieb [mm$^3$] | 98 | 103 | 91 | 103 | 89 |
| Weiterreißwiderstand [N/mm] | 26 | 25 | 28 | 30 | 34 |
| MTS | | | | | |
| tan δ (60 °C) | 0,133 | 0,069 | 0,068 | 0,073 | 0,065 |

Der Einsatz der erfindungsgemäßen Fällungskieselsäuren führt bei nahezu Härte- und Abriebsgleichheit zu einem deutlich niedrigeren tan δ (60 °C)-Wert, wodurch sich der Rollwiderstand und damit der Benzinverbrauch gegen-über einer Standard-LKW-Lauffflächenmischung deutlich reduzieren läßt.

Die Dispersion, gemessen mittels Rauhigkeitsmessung, liegt trotz der hohen Oberfläche der Fällungskieselsäuren im Bereich des Ruß-Standards.

**Beispiel 6:**

Fällungskieselsäuren in einer NR/BR-LKW-Laufflächenmischung

| Rezeptur | 1 | 2 | 3 | 4 | 5 |
|---|---|---|---|---|---|
| | (Standard) | | | | |
| RSS 1 | 100 | 75 | 75 | 75 | 75 |
| Buna CB 11S | - | 25 | 25 | 25 | 25 |
| N 220 | 50 | - | - | - | - |
| Fällungskieselsäure nach Beispiel 1 | - | 38 | - | - | - |
| Fällungskieselsäure nach Beispiel 2 | - | - | 35 | - | - |
| Fällungskieselsäure nach Beispiel 3 | - | - | - | 32 | - |
| Fällungskieselsäure nach Beispiel 4 | - | - | - | - | 32 |
| ZnO RS | 4 | 4 | 4 | 4 | 4 |
| Stearinsäure | 2 | 2 | 2 | 2 | 2 |
| 6PPD | 2 | 2 | 2 | 2 | 2 |
| TMQ | 1 | 1 | 1 | 1 | 1 |
| Protector G 35 | 1,5 | 1,5 | 1,5 | 1,5 | 1,5 |
| X 50-S | - | 19 | 19 | 19 | 19 |
| TBBS | 1,2 | - | - | - | - |
| DPG | - | 0,75 | 0,75 | 0,75 | 0,75 |
| CBS | - | 2 | 2 | 2 | 2 |
| Schwefel | 1,2 | 1,7 | 1,7 | 1,7 | 1,7 |

Mischvorschrift:     siehe Beispiel 5
Vulkanisatdaten:     150 °C/$t_{95\%}$

| Mischung | 1 | 2 | 3 | 4 | 5 |
|---|---|---|---|---|---|
| | (Standard) | Fällungskiesel-säure nach Bei-spiel 1 | Fällungskiesel-säure nach Bei-spiel 2 | Fällungskiesel-säure nach Bei-spiel 3 | Fällungskiesel-säure nach Bei-spiel 4 |
| *Vulkanisations-zeit [min]* | 20 | 30 | 30 | 30 | 30 |
| $F^2H$ (Dispersion) | 14721 | 12398 | 12321 | 14098 | 10876 |
| ML (1+4) | 72 | 79 | 84 | 84 | 87 |
| Zugfestigkeit [MPa] | 25,7 | 22,3 | 22,6 | 22,9 | 20,7 |
| Modul 300 % [MPa] | 11,7 | 13,6 | 12,5 | 12,2 | 11,5 |
| Bruchdehnung [%] | 540 | 430 | 450 | 470 | 457 |
| Shore-A-Härte | 67 | 71 | 70 | 70 | 69 |
| DIN-Abrieb [$mm^3$] | 95 | 70 | 73 | 83 | 70 |
| MTS | | | | | |
| tan $\delta$ (60 °C) | 0,150 | 0,063 | 0,063 | 0,062 | 0,062 |

Die Mischungen der erfindungsgemäßen Fällungskieselsäuren zeigen bei nahezu identischen Werten für Härte und Modul eine exzellente Dispersion, einen guten Abriebwiderstand und einen sehr niedrigen tan $\delta$ (60 °C)-Wert ($\cong$ Rollwiderstand).

**Beispiel 7:**

Fällungskieselsäuren in einer NR/S-SBR-Laufflächenmischung

| Rezeptur | 1 | 2 | 3 | 4 | 5 |
|---|---|---|---|---|---|
| | (Standard) | | | | |
| **RSS 1** | 100 | 75 | 75 | 75 | 75 |
| **Buna VSL 1954/S 25** | - | 25 | 25 | 25 | 25 |
| **N 220** | 50 | - | - | - | - |
| **Fällungskieselsäure nach Beispiel 1** | - | 38 | - | - | - |
| **Fällungskieselsäure nach Beispiel 2** | - | - | 35 | - | - |
| **Fällungskieselsäure nach Beispiel 3** | - | - | - | 32 | - |
| **Fällungskieselsäure nach Bei-spiel 4** | - | - | - | - | 32 |

(fortgesetzt)

| Rezeptur | 1 | 2 | 3 | 4 | 5 |
|---|---|---|---|---|---|
| | (Standard) | | | | |
| ZnO RS | 4 | 4 | 4 | 4 | 4 |
| Stearinsäure | 2 | 2 | 2 | 2 | 2 |
| 6PPD | 2 | 2 | 2 | 2 | 2 |
| TMQ | 1 | 1 | 1 | 1 | 1 |
| Protector G 35 | 1,5 | 1,5 | 1,5 | 1,5 | 1,5 |
| X 50-S | - | 19 | 19 | 19 | 19 |
| TBBS | 1,2 | - | - | - | - |
| DPG | - | 0,75 | 0,75 | 0,75 | 0,75 |
| CBS | - | 2 | 2 | 2 | 2 |
| Schwefel | 1,2 | 1,3 | 1,3 | 1,3 | 1,3 |

Mischvorschrift:     siehe Beispiel 5
Vulkanisatdaten:     150 °C/$t_{95\%}$

| Mischung | 1 | 2 | 3 | 4 | 5 |
|---|---|---|---|---|---|
| | (Standard) | Fällungskiesel-säure nach Bei-spiel 1 | Fällungskiesel-säure nach Bei-spiel 2 | Fällungskiesel-säure nach Bei-spiel 3 | Fällungskiesel-säure nach Bei-spiel 4 |
| *Vulkanisations-zeit [min]* | 20 | 25 | 25 | 25 | 25 |
| $F^2H$ (Dispersion) | 12738 | 17520 | 20196 | 27299 | 17226 |
| ML (1+4) | 71 | 71 | 68 | 71 | 71 |
| Zugfestigkeit [MPa] | 24,7 | 18,6 | 21,3 | 20,3 | 20,3 |
| Modul 300 % [MPa] | 11,4 | 15,1 | 13,4 | 11,8 | 10,6 |
| Bruchdehnung [%] | 530 | 360 | 430 | 450 | 471 |
| Shore-A-Härte | 66 | 71 | 69 | 67 | 66 |
| DIN-Abrieb [$mm^3$] | 110 | 106 | 107 | 110 | 115 |
| MTS | | | | | |
| tan δ ( 0 °C) | 0,260 | 0,270 | 0,264 | 0,256 | 0,265 (0,165) |
| tan δ (60 °C) | 0,133 | 0,073 | 0,082 | 0,082 | 0,080 |

Durch Einsatz der erfindungsgemäßen Fällungskieselsäuren läßt sich bei exzellenter Dispersion und vergleichbarem Abrieb gegenüber der Standardmischung sowohl der tan δ (0 °C) (≅ Naßrutschfestigkeit) verbessern als auch der Rollwiderstand [tan δ (60 °C)] reduzieren.

**Patentansprüche**

1. Fällungskieselsäuren, dadurch gekennzeichnet, daß sie eine CTAB-Oberfläche (gemäß ASTM D 3765-92) von 200 bis 400 m$^2$/g, eine DBP-Zahl (gemäß ASTM D 2414) zwischen 230 und 380 ml/100g als Pulver und 180 - 250 g/100 g als Granulat, eine Silanolgruppendichte (V$_2$-Verbrauch an NaOH) von 20 bis 30 ml und eine für den jeweiligen Oberflächenbereich typische, mittels Hg-Porosimetrie (DIN 66 133) zu ermittelnde Makroporengrößenverteilung für bestimmte Porengrößenintervalle (inkrementelle Auftragungsweise) wie folgt aufweisen:

| Porengrößenintervall [nm] | Oberflächenbereich CTAB: 200-250 m$^2$/g | Oberflächenbereich CTAB: 250-300 m$^2$/g | Oberflächenbereich CTAB: 300-400 m$^2$/g |
|---|---|---|---|
| | Hg-Verbrauch ml/g Kieselsäure | | |
| 10 - 20 | 0,27 - 0,49 | 0,35 - 0,50 | 0,32 - 0,42 |
| 20 - 30 | 0,22 - 0,32 | 0,15 - 0,30 | 0,17 - 0,22 |
| 30 - 40 | 0,15 - 0,21 | 0,12 - 0,17 | 0,12 - 0,15 |
| 40 - 50 | 0,11 - 0,16 | 0,09 - 0,12 | 0,08 - 0,11 |
| 50 - 60 | 0,08 - 0,12 | 0,06 - 0,10 | 0,06 - 0,09 |

2. Verfahren zur Herstellung der Fällungskieselsäuren gemäß Anspruch 1, dadurch gekennzeichnet, daß man in eine auf 30 bis 90 °C, vorzugsweise auf 50 bis 80 °C, erwärmte Vorlage aus Wasser, die unter Zusatz von geringen Mengen an Schwefelsäure auf einen pH-Wert von 5 bis 5,9 eingestellt ist, unter Konstanthalten des pH-Wertes von 5,0 bis 5,9 durch gleichzeitigen Zulauf von Alkalisilikatlösung und Schwefelsäure, unter anhaltendem Scheren während der gesamten Fällzeit, durch 30 bis 120-minütige Unterbrechung der Fällung, die Umsetzung bis zu einer Feststoffkonzentration von 40 bis 60 g/l durchführt, die Fällungskieselsäuresuspension filtriert, wäscht und den Filterkuchen einer Kurzzeittrocknung unterzieht, gegebenenfalls vermahlt oder granuliert.

3. Vulkanisierbare Kautschukmischungen, dadurch gekennzeichnet, daß diese Mischungen 5 bis 100 Teile, insbesondere 15 bis 60 Teile der Fällungskieselsäuren gemäß Anspruch 1, bezogen auf 100 Teile Kautschuk, enthalten.

4. Fällungskieselsäuren gemäß Anspruch 1, dadurch gekennzeichnet, daß auf ihren Oberflächen mit Organosilanen der Formeln I bis III

$$[R_n^1\text{-}(RO)_{3\text{-}n}\ Si\text{-}(Alk)_m\text{-}(Ar)_p]_q[B] \tag{I}$$

oder

$$R_n^1\ (RO)_{3\text{-}n}\ Si\text{-}(Alkyl) \tag{II}$$

oder

$$R_n^1\ (RO)_{3\text{-}n}\ Si\text{-}(Alkenyl) \tag{III},$$

modifiziert werden, wobei bedeuten:

B: -SCN, -SH, -Cl, -NH$_2$ (wenn q = 1) oder -S$_x$- (wenn q = 2),

R und R$^1$: eine Alkylgruppe mit 1 bis 4 Kohlenstoffatomen, den Phenylrest, wobei alle Reste R und R$^1$ jeweils die gleiche oder eine verschiedene Bedeutung haben können,

n: 0; 1 oder 2,

Alk: einen zweiwertigen geraden oder verzweigten Kohlenwasserstoffrest mit 1 bis 6 Kohlenstoffatomen,

m: 0 oder 1,

Ar: einen Arylenrest mit 6 bis 12 C-Atomen, bevorzugt 6 C-Atome,

p: 0 oder 1 mit der Maßgabe, daß p und n nicht gleichzeitig 0 bedeuten,

x: eine Zahl von 2 bis 8,

Alkyl: einen einwertigen geraden oder verzweigten gesättigten Kohlenwasserstoffrest mit 1 bis 20 Kohlenstoffatomen, bevorzugt 2 bis 8 Kohlenstoffatomen,

Alkenyl: einen einwertigen geraden oder verzweigten ungesättigten Kohlenwasserstoffrest mit 2 bis 20 Kohlenstoffatomen, bevorzugt 2 bis 8 Kohlenstoffatomen.

5. Kautschukmischungen und/oder Vulkanisate, die die Fällungskieselsäuren gemäß Anspruch 1, die gegebenenfalls mit Organosilanen modifiziert sind, enthalten.

## Claims

1. Precipitated silicas, characterised by having a CTAB surface area (according to ASTM D 3765-92) of from 200 to 400 $m^2$/g, a DBP value (according to ASTM D 2414) of from 230 to 380 ml/100 g as powder and from 180 to 250 g/100 g as granular material, a density of silanol groups ($V_2$ = consumption of NaOH) of from 20 to 30 ml and, for particular pore-size intervals (incremental mode of plotting), a macropore size-distribution (to be determined by means of Hg porosimetry (DIN 66 133)) typical for the respective range of surface areas as given below:

| | Range of surface areas CTAB:200-250 $m^2$/g | Range of surface areas CTAB:250-300 $m^2$/g | Range of surface areas CTAB:300-400 $m^2$/g |
|---|---|---|---|
| Pore-size interval [nm] | Hg consumption ml/g silica | | |
| 10 - 20 | 0.27 - 0.49 | 0.35 - 0.50 | 0.32 - 0.42 |
| 20 - 30 | 0.22 - 0.32 | 0.15 - 0.30 | 0.17 - 0.22 |
| 30 - 40 | 0.15 - 0.21 | 0.12 - 0.17 | 0.12 - 0.15 |
| 40 - 50 | 0.11 - 0.16 | 0.09 - 0.12 | 0.08 - 0.11 |
| 50 - 60 | 0.08 - 0.12 | 0.06 - 0.10 | 0.06 - 0.09 |

2. Process for the preparation of precipitated silicas according to claim 1, characterised in that in a receiver of water heated to 30°C to 90°C, preferably to 50°C to 80°C, which is adjusted to a pH value of 5 to 5.9 by addition of small quantities of sulfuric acid, with the pH value of 5.0 to 5.9 being maintained constant by simultaneous introduction of alkali metal silicate solution and sulfuric acid, with continual shearing throughout the period of precipitation, by 30- to 120-minute interruption of the precipitation, the reaction is carried out until a solids concentration of 40 to 60 g/l is obtained, the suspension of precipitated silica is filtered and washed and the filter cake is subjected to an accelerated drying and optionally ground or granulated.

3. Vulcanisable rubber mixtures, characterised in that these mixtures contain 5 to 100 parts, in particular 15 to 60 parts, of the precipitated silicas according to claim 1, based on 100 parts rubber.

4. Precipitated silicas according to claim 1, characterised in that the surfaces thereof are modified with organosilanes corresponding to formulae I to III

$$[R^1_n \text{ -(RO)}_{3-n} \text{ Si-(Alk)}_m \text{ -(Ar)}_p]_q [B] \qquad (I)$$

or

$$R^1{}_n(RO)_{3-n} \text{ Si-(Alkyl)} \qquad\qquad\text{(II)}$$

or

$$R^1{}_n(RO)_{3-n} \text{ Si-(Alkenyl)} \qquad\qquad\text{(III)},$$

wherein

B denotes -SCN, -SH, -Cl, -NH$_2$ (if q = 1) or -S$_x$- (if q = 2),

R and R$^1$ denote an alkyl group having 1 to 4 carbon atoms, the phenyl group, all groups R and R$^1$ in each case possibly having the same or different meanings,

n is 0; 1 or 2,

Alk denotes a divalent linear or branched hydrocarbon group having 1 to 6 carbon atoms,

m is 0 or 1,

Ar denotes an arylene group having 6 to 12 carbon atoms, preferably 6 C atoms,

p is 0 or 1, with the proviso that p and n do not simultaneously denote 0,

x is a number from 2 to 8,

Alkyl denotes a monovalent linear or branched saturated hydrocarbon group having 1 to 20 carbon atoms, preferably 2 to 8 carbon atoms,

Alkenyl denotes a monovalent linear or branched unsaturated hydrocarbon group having 2 to 20 carbon atoms, preferably 2 to 8 carbon atoms.

5. Rubber mixtures and/or vulcanisates, which contain the precipitated silicas according to claim 1, which are optionally modified with organosilanes.

**Revendications**

1. Acide silicique de précipitation,
caractérisé en ce qu'
il présente une surface CTAB (selon la norme ASTM D 3765-92) de 200 à 400 m$^2$/g, un indice DBP (selon la norme ASTM D 2414) compris entre 230 et 380 ml/100 g sous forme de poudre et 180-250 g/100 g sous forme de granulé, une densité de groupes silanol (consommation V$_2$ en NaOH) de 20 à 30 ml et une répartition des tailles des macropores typique, a déterminer au moyen une porosimétrie Hg (norme DIN 66 133) pour des intervalles déterminés de tailles de pores (par dépôt incrémentiel) comme suit :

| Intervalle de taille des pores [nm] | Domaine de surface CTAB : 200-250 m$^2$/g | Domaine de surface CTAB : 250-300 m$^2$/g | Domaine de surface CTAB : 300-400 m$^2$/g |
|---|---|---|---|
| | Consommation d'Hg ml/g d'acide silicique | | |
| 10-20 | 0,27-0,49 | 0,35-0,50 | 0,32-0,42 |
| 20-30 | 0,22-0,32 | 0,15-0,30 | 0,17-0,22 |
| 30-40 | 0,15-0,21 | 0,12-0,17 | 0,12-0,15 |

(fortgesetzt)

|  | Domaine de surface CTAB : 200-250 $m^2$/g | Domaine de surface CTAB : 250-300 $m^2$/g | Domaine de surface CTAB : 300-400 $m^2$/g |
|---|---|---|---|
| Intervalle de taille des pores [nm] | Consommation d'Hg ml/g d'acide silicique | | |
| 40-50 | 0,11-0,16 | 0,09-0,12 | 0,08-0,11 |
| 50-60 | 0,08-0,12 | 0,06-0,10 | 0,06-0,09 |

2. Procédé de production des acides siliciques de précipitation selon la revendication 1, caractérisé en ce que
dans un récipient chauffé à 30 à 90°C, de préférence à 50 à 80°C, rempli d'eau qui est réglée par addition de faibles quantités d'acide sulfurique à un pH de 5 à 5,9, avec maintien constant du pH entre 5,0 et 5,9 par addition simultanée d'une solution de silicate alcaline et d'acide sulfurique, avec maintien d'un cisaillement pendant toute l'opération de précipitation, par une interruption de 30 à 120 minutes de la précipitation, on procède à la réaction jusqu'à une concentration en solides de 40 à 60 g/l, on filtre la suspension d'acide silicique de précipitation, on lave et on soumet le gâteau de filtration à un séchage rapide, le cas échéant on broie ou on granule.

3. Mélanges de caoutchoucs vulcanisés,
caractérisés en ce que
ces mélanges contiennent de 5 à 100 parties, en particulier de 15 à 60 parties des acides siliciques de précipitation selon la revendication 1, par rapport à 100 parties de caoutchouc.

4. Acides siliciques de précipitation selon la revendication 1,
caractérisés en ce qu'
ils sont modifiés à leur surface avec des organosilanes de formules I à III

$$[R_n^1\text{-}(RO)_{3-n}\,Si\text{-}(alc)_m\text{-}(Ar)_p]_q[B] \qquad (I)$$

ou

$$R_n^1(RO)_{3-n}\,Si\text{-}(alkyl) \qquad (II)$$

ou

$$R_n^1(RO)_{3-n}\,Si\text{-}(alcényl) \qquad (III),$$

formules dans lesquelles :

B représente : -SCN, -SH, -Cl, -NH$_2$ (lorsque q = 1) ou -S$_x$-(lorsque q = 2),
R et R$^1$ représentent un groupe alkyle ayant 1 à 4 atomes de carbone, le radical phényle, tous les radicaux R et R$^1$ pouvant toujours avoir la même signification ou une signification différente,
n vaut 0, 1 ou 2,
alk représente un radical hydrocarboné bivalent à chaîne droite ou ramifiée ayant de 1 à 6 atomes de carbone,
m vaut 0 ou 1,
Ar représente un radical arylène ayant de 6 à 12 atomes de carbone, de préférence 6 atomes de carbone,
p vaut 0 ou 1, sous réserve que p et n ne valent pas simultanément 0,
x représente un nombre de 2 à 8,
alkyle : représente un radical hydrocarboné saturé à chaîne droite ou ramifiée monovalent ayant de 1 à 20 atomes de carbone, de préférence de 2 à 8 atomes de carbone,
alcényle représente un radical hydrocarboné insaturé à chaîne droite ou ramifié monovalent ayant de 2 à 20 atomes de carbone, de préférence de 2 à 8 atomes de carbone.

5. Mélanges de caoutchoucs et/ou produits de vulcanisation selon la revendication 1, qui contiennent les acides siliciques de précipitation selon la revendication 1, qui sont le cas échéant modifiés avec des organosilanes.